# EUROPEAN PATENT SPECIFICATION

(11) **EP 0 675 076 B1**
(45) Date of publication and mention of the grant of the patent: **02.10.2002**
(21) Application number: 95400695.3
(22) Date of filing: 29.03.1995
(51) Int. Cl.: C01B 25/24, C07F 9/09

(54) **Phosphorylation agent, process and use**
Phosphorylierungsreagens, Verfahren und Verwendung
Agent de phosphorylation, procédé et utilisation

(30) Priority: 30.03.1994 US 220069; 30.03.1994 US 220339; 06.03.1995 US 399253; 07.03.1995 US 400077
(43) Date of publication of application: 04.10.1995
(60) Divisional application: 01127171.5
(73) Proprietor: RHODIA INC., Cranbury, New Jersey 08512 (US)
(72) Inventor: Reierson, Robert L., Cranbury, New Jersey 08512 (US)
(74) Representative: Seugnet, Jean Louis

(56) References cited:
- EP-A- 0 276 777
- DE-A- 3 520 053
- FR-A- 1 446 884
- US-A- 2 169 588
- US-A- 3 235 627
- US-A- 4 350 645
- CHEMICAL ABSTRACTS, vol. 81, no. 14, 7 October 1974 Columbus, Ohio, US; abstract no. 79879x, page 125;
- CHEMICAL ABSTRACTS, vol. 82, no. 5, 3 February 1975 Columbus, Ohio, US; abstract no. 30349f, page 430;
- CHEMICAL ABSTRACTS, vol. 108, no. 10, 7 March 1988 Columbus, Ohio, US; abstract no. 78090x, page 159;
- JOURNAL OF THE AMERICAN CHEMICAL SOCIETY, vol. 88, no. 19, 5 October 1966 WASHINGTON, DC US, pages 4401-4405, F. B. CLARKE ET AL.
- COMUN. JORN. COM. ESP. DETERG., vol. 19, 1988 pages 191-205, T. KUROSAKI ET AL.

## Description

### Field of The Invention

This invention relates to a unique phosphating agent and to a simple, reliable process utilizing this agent prepared separately or in-situ to produce phosphate ester compositions which have high monoalkyl phosphate content in combination with low dialkyl phosphate, trialkyl phosphate, phosphoric acid and other nonionic components, such as the alcohol starting material.

### Description of the Prior Art

The superior performance of fatty alcohol based anionic phosphate esters enriched in monoalkyl ester content relative to dialkyl content has been demonstrated, particularly with respect to surfactant esters used in cosmetic and personal hygiene cleansers. These high monoalkyl phosphate surfactants exhibit a unique combination of good detergency and low skin irritancy, especially in comparison to alkyl sulfate or alkyl sulfonate surfactants. In a given alkyl phosphate mixture, as the dialkyl phosphate content increases, the solubility, foaming ability, and detergency decrease and the Krafft point increases. The commercially desirable range for a "monoalkyl" phosphate composition has been defined to be wherein the ratio of monoalkyl to dialkyl phosphate is at least 80:20 weight percent (U.S. Patent 4,139,485). Acceptable performance was found at 70:30, and relatively little additional improvement was obtained above 90:10.

Typical phosphation processes do not produce high monoalkyl phosphate mixtures together with low dialkyl phosphate, low phosphoric acid and low residual alcohol content. The two commonly used phosphating agents produce two extremes in the compositional range.

In one case, polyphosphoric acid reacts with alcohols to produce a mixture of high monoalkyl phosphate and low dialkyl phosphate but also high phosphoric acid. This is expected since the polyphosphoric acid consists essentially of linear chains which would produce one molecule of phosphoric acid from the "tail-end" of each chain.

The amount of phosphoric acid which would be produced from the chain ends by complete alcoholysis of a sample of an approximately 117% polyphosphoric acid was calculated to be 23.2 mole percent. Reaction of simple alcohols with an equimolar amount of 117% polyphosphoric acid was reported to produce from 21.0 to 23.8% orthophosphoric acid. An excess of alcohol was necessary to drive the reaction to completion (F. Clarke and J. Lyons, J. Am. Chem. Soc. 88 4401 (1966)).

To produce a monoalkyl phosphate without dialkyl phosphate contamination theoretically could be done from pyrophosphoric acid. Alcoholysis would yield one mole of phosphoric acid and one mole of monoalkyl phosphate.

Reaction of lauryl alcohol in a molar amount equal to the pyrophosphoric acid plus tripolyphosphoric acid in 105% polyphosphoric acid at room temperature to 65° C over a two hour period followed by fourteen hours at 71-72° C produced a creamy, very viscous mass which contained about 69 mole % phosphoric acid, 20 mole % monolauryl phosphate and 11% pyrophosphate intermediates. Addition of excess alcohol to the mass at room temperature followed by heating to 52° C over three hours to complete the conversion of the pyrophosphates gave a solution in which the molar ratios were 76% phosphoric acid, almost 24% monolauryl phosphate, and only a trace of dilauryl phosphate. The theoretical distribution based on the original 105% polyphosphoric acid composition was 73% phosphoric acid and 27% lauryl phosphate.

Because of the relatively low reactivity of the pyrophosphate intermediates with the alcohols, an excess of one of the reactants is usually used. U. S. Patent 3,235,627 discloses that an equivalent ratio of 1.2-4.0 polyphosphoric acid per mole alcohol produces a mixture of 85-100% monoalkyl phosphates and that a large percentage of unreacted alcohol will remain if an excess of the polyphosphoric acid is not used. This patent also states that the use of excess alcohol is undesirable because higher levels of dialkyl phosphates are produced.

In the graphical representation of their data, which covers the range of 100 to 115% polyphosphoric acid, T. Kurosaki et al., Comun. Jorn. Com. Esp. Deterg. 19, 191 (1988) shows that a stoichiometric amount of the most concentrated acid evaluated, about 113%, produces only 60% alcohol conversion and requires a two-fold molar excess to achieve about 95% conversion. The article concludes that in order to manufacture high purity monoalkyl phosphate, removal of the resulting excess phosphoric acid coproduct from the mixture is required.

The "polyphosphoric acid" reagents used by this reference are of lower effective equivalent polyphosphoric acid weight percent than that of the reagents of the instant invention which have a minimum of 118 weight percent.

The large amount of phosphoric acid thus unavoidably produced in processes based on the common, approximately 115% polyphosphoric acids, is an undesirable coproduct which is particularly troublesome in cosmetic products, electrolyte solutions, emulsions and in the spinning of synthetic fibers and have necessitated the development of many purification methods to partition the acid and the organophosphate into aqueous and organic layers which can then be separated.

Another example of such type of process can be found in FR 1446 884, in which alcohol is reacted with a polyphosphoric acid having a 115 % of phosphoric acid, although ranges of 110-120 % are claimed.

The other extreme of the product composition is produced by the use of phosphoric anhydride, P₄O₁₀. In contrast to the 115% viscous liquid polyphosphoric acid, P₄O₁₀ is a white powder which is highly reactive with alcohols even at room temperature. It is a powerful dehydrating agent and relatively insoluble in most common organic solvents except those with which it reacts. If in excess or not adequately dispersed in the reaction liquor, it forms undesirable by-products. Under favorable conditions, the reaction of P₄O₁₀ still proceeds through a complex series of intermediates. The problems with any attempt to control selectivity arise from the fact that each polyphosphate intermediate has its characteristic solubility and reaction rate.

In the presence of other hydroxy functional species such as adventitious water or a mixture of alcohols, the product distribution is a function of the concentration, (which is related to solubility), and the competitive reaction rates of each phosphate intermediate with each hydroxy compound. These conditions change throughout the course of the reaction as the more reactive species are preferentially consumed and their relative concentrations decrease.

Theoretically, an equimolar mixture of monoalkyl phosphate (MAP) and dialkyl phosphate (DAP) would be formed under ideal conditions and, in fact, reaction of P₄O₁₀ with a two fold stoichiometric excess of lauryl alcohol, i.e. 12 moles per P₄O₁₀, under standard laboratory conditions produced a mixture of phosphates in a molar ratio of about 0.509 MAP:0.485 DAP:0.007 H₃PO₄.

A third option, which is the direct esterification of phosphoric acid, is not practical because of its low reactivity, and the difficulty realized in removing water from the polar and increasingly viscous product mixture. The high temperatures of at least 120° C, reduced pressure of 300 torr or less, preferably less than 50 torr, and/or the use of azeotropic solvents which are used to drive the reaction to completion also produce the undesirable dialkyl phosphates and still leave undesirable levels of unreacted phosphoric acid (T. Kurosaki, et al., Oil Chemistry, 39(4), 259, (1990)). Combination of an orthophosphoric acid with an alcohol under less than anhydrous conditions (specifically as 85% orthophosphoric acid) without less than atmospheric pressure, an azeotropic agent or temperatures considerably above the 100° C water boiling point would not result in production of any significant amount of ester.

Several attempts to reduce the tendency of phosphoric anhydride to produce dialkyl phosphate coproduct have been reported. Early work postulated that in the optimum case, substitution of two moles of water for two of the six moles of alcohol required to completely convert P₄O₁₀ to orthophosphates would produce essentially four moles of the monoalkyl phosphate. (Sanyo Kasei Kogyo K.K., Japanese Patent Publication 41-14416 (1966)). As mentioned above, the reaction sequence is complex. Although high monoalkyl to dialkyl molar ratios of up to 94:6 were reported, substantial conversion of phosphoric anhydride to phosphoric acid also occurred, 60 mole percent, in this example, at the upper end of the "suitable range" of water content, and generally, excessively high levels of phosphoric acid were produced throughout the series. The unreacted alcohol content was not reported, but under the stated conditions of stoichiometry in the example cited, it could be presumed to be equal to the moles of phosphoric acid minus the moles of dialkyl phosphate or about 58 mole percent. The author clearly stated that the addition of water to the phosphoric anhydride followed by reaction with the alcohol was an unsuitable alternative.

Almost simultaneously, another case (Daiichi Kogyo Seiyaku Co., Ltd., Japanese Patent Publication 42-6730 (1967)) reported the similar use of 85% phosphoric acid (0.960 mole water per mole H₃PO₄). This strategy, however, was to react the orthophosphoric acid and the phosphoric anhydride separately with the alcohol apparently in the presence of the water introduced with the 85% phosphoric acid. Duplication of the 42-6730 examples clearly showed that the 85% phosphoric acid did not react with the alcohol under the stated conditions. Complete analysis of the reaction mixtures during and at the completion of the experimental sequence further revealed that the conversion was not complete at the end of the stated reaction period, but rather was finished in the subsequent, apparently necessary work up procedures for separation and characterization of the monoalkyl ester product. The amounts of other products or components in the product mixture were not reported. The quantities of monoalkyl phosphate found upon duplication of the examples in the laboratory were significantly lower than the high yields of monoalkyl phosphate reported.

A more recent study more precisely determined the affect of the ratios between water, alcohol and phosphoric anhydride on the phosphate product composition, again with particular emphasis upon the monoalkyl and dialkyl phosphate ratio (T. Kurosaki, et al. Comun. Jorn. Com. Esp. Deterg. 19, 191 (1988)). High resolution phosphorus-31 nuclear magnetic resonance spectroscopy was used to quantify the phosphorus species. Even under what appeared to be the most favorable ratios and method, the residual phosphoric acid content was still over 15 mole percent of the total phosphorus species and the monoalkyl phosphate leveled off at about 60 mole percent. The residual alcohol level was not reported.

The use of phosphorus oxychloride is not a good option because it is not selective; it produces three moles of hydrogen chloride per mole of phosphate, which is highly corrosive and must be scrubbed from the reactor emissions to prevent environmental pollution; and it produces an undesirable alkyl chloride by-product (U. S. Patent 4,350,645).

Even within the limitations of the above phosphation agents, it is possible to obtain desirable intermediate product mixtures by certain multi-staged reaction sequences. For example, the addition of one mole of P₄O₁₀ to four moles of an unsaturated alcohol followed by a digestion period, then addition of two moles water and continued heating to completion was reported to yield a high monoalkyl phosphate containing a polymerizable vinyl group (U. S. Patent 3,686,371).

A more complicated process involves preparation of a phosphate ester mixture by a standard reaction sequence, and then use of the resulting mixture as the reaction medium to which additional phosphoric anhydride, alcohol, and water are added. The intent is to produce the symmetrical dialkyl pyrophosphate as the major product, then to hydrolyze it to the monoalkyl phosphate in the final step (U. S. Patent 4,126,650).

The best results were obtained by multiply staging the reagent addition and heel production events. That is, to the initially formed heel, the remaining phosphoric anhydride and alcohol are alternately added in four equal aliquots at the reaction temperature of 75-90° C. The mixture is then digested at 85° C for two hours; water and 30% hydrogen peroxide added; and the reaction completed at 80° C to yield a final product containing over 80 weight % monoalkyl acid phosphate (titration analysis).

Another study (U. S. Patent 4,350,645) also utilized a two stage process but in direct opposition to the above two examples. The '371 process described above, in fact, is very similar to the Method 2 reported to be inferior by this principal author, Kurosaki, in his 1988 publication (vide supra).

The purpose of the first stage in '645 is to combine an equimolar mixture of water and alcohol with phosphoric anhydride (two moles each, per mole of P₄O₁₀) to prepare an intermediate composition, i.e. a heel. This monoalkyl pyrophosphate heel is then reacted with the remaining two 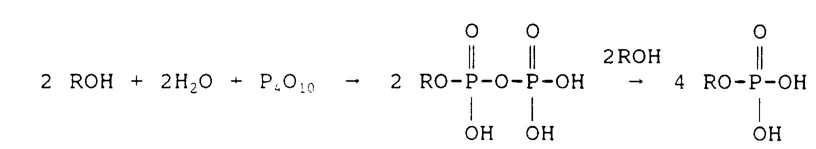 moles of alcohol to convert the pyrophosphate intermediates to orthophosphates. The best product ratios realized for lauryl phosphate, about 0.821:0.081:0.099 MAP:DAP:H₃PO₄ (molar) and 0.829:0.134:0.037 (weight) (MAP:DAP weight ratio, 86.1:13.9) for this simplified two step process are comparable to the multiply staged addition process, considering the accuracy of the titrimetric analysis, (U. S. Patent 4,126,650) and are superior to the single stage processes. Further specific evidence was provided by Comparative Example 1 in this case. The lauryl alcohol phosphation by 85% phosphoric acid and P₄O₁₀ is essentially the same as the Example 1 in 42-6730. The more completely defined composition, however, is reported as 66.2 mole % monoalkyl phosphate, 18.9% dialkyl phosphate and 14.9% phosphoric acid in contrast to the "yield of dodecyl monophosphate: 94.7%" reported in 42-6730.

The above summary essentially describes the state of the existing technology for the preparation of enriched monoalkyl phosphate compositions by direct phosphation and the desirable properties of these compositions, especially for mixtures with MAP:DAP weight ratios of 80:20 or greater. Other, even more sophisticated methods are known which involve the preparation of intermediates in multiple-step processes which have blocking groups that must be removed and separated as impurities after the intermediates are used to phosphate the alcohol substrate; however, these processes are too expensive to be viable for most commercial product applications.

### Summary of the Invention

The present invention relates to a process for preparing monoalkyl phosphoric acid ester compositions using a phosphating agent which can be prepared separately or in-situ to produce phosphate ester compositions in a single step, solventless process wherein the weight ratio of monoalkyl acid phosphate to dialkyl acid phosphate is greater than 80:20, concomitant with low levels of free phosphoric acid and residual alcohol.

The optimum phosphation reagent composition is from about 121-123%, expressed as an effective equivalent percent of polyphosphoric acid. The reagent is prepared by intimately blending and exclusively reacting phosphoric anhydride (P₄O₁₀) with phosphoric acid (H₃PO₄) to produce a uniform slurry or paste. Alternately, the reagent is prepared in-situ by intimately blending and exclusively reacting phosphoric acid (H₃PO₄) dissolved in an organic alcohol (ROH) with phosphoric anhydride (P₄O₁₀). This reagent, in the alcohol medium, ultimately reacts with the alcohol to produce the phosphate ester compositions of this invention.

The phosphate esters of this invention can be formed by contacting the reagent paste or slurry with the organic alcohol (ROH) with sufficient stirring and temperature control to dissolve the reagent in the alcohol and carry the reaction to completion.

The essence of the alternate in-situ reagent process lies in the discovery that the highly selective phosphation reagent can be prepared and utilized during a single reaction stage phosphation process by first preparing a solution of phosphoric acid dissolved in organic alcohol(s) under essentially non-reactive temperature conditions; and then intimately blending an appropriate amount of phosphoric anhydride into the acid-alcohol solution with sufficient stirring and temperature control to form the phosphation reagent; and finally, carrying out the phosphation reaction to completion.

### Detailed Description of the Invention

The invention provides a new process for the production of enriched monoalkyl phosphate ester compositions as defined in claim 1, using a phosphating agent which is a direct derivative of phosphoric anhydride in which phosphoric acid is used as a blocking group. This new reagent may be prepared independently and quantitatively under a wide range of times and temperatures and, when isolated, is stable to storage under anhydrous conditions. It dissolves more readily than phosphoric anhydride, is pumpable when warmed to reduce its viscosity, and can be added more rapidly to the alcohol without the highly exothermic heat of reaction problems characteristic of phosphoric anhydride.

This selective phosphation reagent can also be prepared and utilized in-situ during a single reaction stage phosphation process as defined in claim 5 by first preparing a reactant solution of phosphoric acid dissolved in organic alcohol(s) under essentially non-reactive temperature conditions; and subsequently intimately blending an appropriate amount of phosphoric anhydride into the reactant solution with sufficient stirring and temperature control to form the phosphation reagent. Finally the phosphation reaction between the unique reagent and the alcohol is completed by increasing the temperature of the reagent-alcohol mixture.

Apparently, under appropriate temperature conditions, the phosphoric anhydride reacts with the -OH group of the phosphoric acid preferentially as the anhydride is added to the acid-alcohol solution to form the phosphate group-blocked phosphation reagent which then subsequently reacts with the alcohol in the same manner as the reagent would have reacted had it been prepared in a separate process prior to addition to the alcohol.

In contrast to the use of the commercially available, 115-117% polyphosphoric acids alone, it has been discovered that with the use of this phosphation reagent prepared either separately or in-situ, it is not necessary to use an excess of acid relative to the alcohol in order to achieve good conversion rates and low residual alcohol content. In fact, stoichiometrically equal amounts of alcohol and the phosphation reagent are most desirable. The phosphoric acid used as the blocking group is consumed in the process, hence does not contribute excessively to the residual amount. Consequently, the residual phosphoric acid concentration is comparable to that obtained by the most preferable multi-staged processes previously described.

With the process of the instant invention, in which monoalkyl to dialkyl phosphate weight ratios equal to or greater than 80:20 are achieved, the weight percents of the residual alcohol and phosphoric acid are individually each less than 6%.

This phosphation reagent, when prepared separately, is in the form of a suspension of small, "fluffy", white particles in a viscous, clear matrix. It is stirrable above room temperature and therefore pumpable. It dissolves much more readily than P₄O₁₀, even though the particle size is much larger, and does not produce the hard, slowly soluble, black chunks which are encountered when P₄O₁₀ itself is mixed into a polyethoxylated alcohol. Since most of the ring strain energy of the tetrahedral P₄O₁₀ molecule and its initial bicyclic intermediate has been released, the heat of reaction is primarily that resulting from conversion of the phosphorus-oxygen-phosphorus anhydride bonds of simple monocyclic or linear intermediates to the carbon-oxygen-phosphorus ester and the hydrogen-oxygen-phosphorus acid bonds. The staged release of energy thus achieved is much easier to control on a commercial process scale and the better control allows minimization of undesirable by-products.

Once the reagent has been separately prepared, the sequence of reactant addition is not critical. For example, the alcohol can be added to the reactor containing the phosphation reagent or the phosphation reagent can be added to the alcohol. As is well known in the art, addition of alcohol to P₄O₁₀ powder can result in a vigorous, potentially uncontrollable and hazardous reaction.

The generation of the reagent in the alcohol matrix of the in-situ process may place additional constraints on the process. The alcohol may become competitive with the acid -OH groups, particularly as the concentration of easily available, unhindered 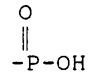 groups diminishes and reactive species such as the bicyclic phosphate may remain, which, if reacted only with alcohol would contribute to a higher dialkyl phosphate concentration. The presence of the alcohol, therefore, may amplify the sensitivity of the product composition to subtle variations in raw material purity, especially with respect to contamination by traces of moisture.

An indication of the nature of the initial composition of this unique phosphation reagent is obtained from the phosphorus -31 nuclear magnetic resonance spectrum prepared in the absence of alcohol. For comparison, the principal component in 105 weight % polyphosphoric acid is phosphoric acid itself, 50 mole %, followed by pyrophosphoric acid, 40 mole % and tripolyphosphoric acid, 10 mole %. A spectrum for 115 weight % polyphosphoric acid still shows some orthophosphoric acid, 8 mole %; and a more complex pattern comprised of pyrophosphoric acid and the phosphates at the ends of the higher molecular weight chains, accounting for 46 mole % of the phosphorus species, with the remaining 46 mole % being the internal chain phosphate groups. The spectrum of the novel phosphation reagent of this invention, in contrast, for a composition equivalent to 122.5 weight % phosphoric acid, shows only a trace of orthophosphoric acid; 11 mole % chain end and pyrophosphoric acid groups; and 87% middle and/or cyclic phosphate groups and 2 mole % branched phosphate groups. Exhaustive interpretation would be difficult because of the wide range of possible structures; however, it is clear that signals characteristic of P₄O₁₀ and phosphoric acid are essentially absent, signals for branched and pyrophosphates are minimal, and the bulk of the phosphorus species are of the most desired cyclic or linear anhydride type.

The process by which the phosphation reagent may be independently prepared is by contacting and exclusively reacting phosphoric anhydride (P₄O₁₀) with phosphoric acid (H₃PO₄) in a manner such that the two components may be blended into a uniform slurry or paste.

The composition of the phosphation reagent of this invention is critical and exists within a narrow range. The phosphoric acid component used may be in a concentration range of from about 75 to about 117% (about 54 to about 85% P₄O₁₀) and is conveniently available commercially in the range of from essentially about 85 to about 115%. The phosphoric anhydride is of high purity and essentially anhydrous.

The reagent compositions prepared in accord with this invention contain branched chains and cyclic intermediates. They, therefore, do not suffer from such high viscosity problems either as the reagent itself or in the intermediate alcohol mixtures which they produce in the course of their use. Since the 115% phosphation reagent composition performs as though it were a polyphosphoric acid at the 115% concentration, the reagent would be expected to provide a continuum of compositions with the lower limit of its useful range being that in which use of commercially available polyphosphoric acid becomes impractical, about 117-118%.

Neither the time nor the temperature of the process for the manufacture of the phosphation reagent per se is critical. The time may range from the minimum required to obtain a uniform mixture in which the P₄O₁₀ powder is thoroughly wetted by and blended with the phosphoric acid. The order of addition is not critical and can be adapted to the available equipment.

The initial temperature may begin at ambient room temperature and range to about 180° C as dictated by temperature control, stirring and pumping capabilities of the reactor and associated equipment. However, prolonged periods at elevated temperatures should be avoided.

The phosphation reagent is stable to storage under reasonable conditions as long as anhydrous conditions are maintained in the storage container. Like all condensed (dehydrated) phosphoric acid materials, the phosphation reagent is hygroscopic and absorption of air moisture will result in a change in the composition.

With respect to the use of the phosphation reagent in a phosphation esterification reaction, the alcohol may be added to the phosphation reagent or the reagent may be added to the alcohol within the mixing and temperature constraints of the reactor, in accordance with standard practices well known in the art. It is not necessary to stage the reaction. Simple combination of the organic alcohol and the phosphation reagent in the proper stoichiometric molar ratio of four moles of alcohol per equivalent mole of P₄O₁₀, i.e. equimolar alcohol-phosphorus, is all that is required.

As noted above, the times and temperatures required for reacting the phosphation reagent with the alcohol can be easily determined by those skilled in the art and are principally a function of the mixing, pumping, and temperature control capabilities of the reactor and associated equipment. During the initial blending step, preferably, the initial temperature would be high enough to promote easy mixing and dissolution, i.e. from about ambient room temperature to about 80° C, but could be the same as the cook temperature. Similarly, the cook temperature would be dictated by the need to obtain reasonably short cycle times without excessive discoloration of the product; typically from about 75° C to about 100° C. Typical reaction times are from about greater than 3 to about 12 hours. Times from about 4 to about 11 hours are preferred, however, depending upon temperature, to prevent product degradation and color formation.

In the preparation of the acid-alcohol reactant solution of the in-situ procedure, the sequence of addition may be important, depending upon the choice of reagents. The important criterion is that the phosphoric acid component be dissolved in the organic alcohol under essentially non-reactive conditions. Heat can be applied to expedite dissolution of the acid in the alcohol, but preferably, the temperature of the solution should not exceed about 65° C; more preferably not exceed about 45° C and that the times at temperatures beyond the preferred range be minimized. For phosphoric acids of about 105% or less, the acid may be added to the alcohol or alcohol to acid within the mixing and temperature constraints of the reactor in accordance with standard practices well known in the art. However, for concentrations above 105%, particularly of about 115%, it becomes more difficult to obtain the desired solution under non-reactive conditions because of the higher reactivity of the polyphosphoric acid and its higher viscosity. In this case, therefore, addition of the polyphosphoric acid to the alcohol with appropriate mixing and cooling would be preferred.

In general, an increase in the MAP:DAP ratio occurs as the composition of the phosphation reagent shifts from phosphoric anhydride rich to phosphoric acid rich. A 70:30 MAP:DAP ratio is produced by an independently prepared 125% composition. This is the lower limit of the product mixtures shown to have useful foaming and solubility properties (U. S. Patent 5,254,691) and considering other process factors such as viscosity and dissolution rates, defines the upper limit of the desirable composition range.

The MAP:DAP ratio similarly produced by a 119.9% composition is in the favorable range, but the residual phosphoric acid and alcohol levels both increase noticeably. These trends are more pronounced for a 115% composition. Control experiments in which 115% polyphosphoric acid is used directly for the phosphation produce similar results, therefore, the phosphation-reagent composition and process for either the in-situ or separately prepared reagent offer no advantage at that concentration. The upper limit of commercial processes in which polyphosphoric acid is produced by orthophosphoric acid dehydration is about 117.5% because of the excessively high viscosities resulting from the long anhydride polymer chains.

Thus, the narrow phosphation reagent composition range is from about 118% to about 125% (expressed as an effective equivalent percent polyphosphoric acid) ; preferably from about 119% - 124% and most preferably from about 121% - 123%.

Having determined the appropriate amounts of phosphoric acid and phosphoric anhydride to prepare the phosphation reagent, all that is required is to ensure that the reagent and the organic alcohol are initially present in the proper stoichiometric molar ratio of four moles of alcohol per P₄O₁₀ mole equivalent, i.e. equimolar alcohol-phosphorus.

A moderate excess of alcohol does not significantly change the MAP:DAP ratio but will contribute to a higher residual alcohol content in the final ester product. Use of significantly less than the stoichiometric amount of alcohol retards the dissolution rate and leaves an undesirably high level of pyrophosphate intermediates which would have to be converted by addition of additional alcohol and/or water.

Since i) it is desirable to minimize alcohol phosphation by the polyphosphoric acid prior to the P₄O₁₀ addition, and ii) the reagent formation is an exothermic reaction; the acid-alcohol solution is preferably cooled to below 45° C prior to the addition of the phosphoric anhydride and kept preferably below about 60° C during the phosphoric anhydride addition. Because addition of alcohol to P₄O₁₀ powder can result in a vigorous, uncontrollable, potentially hazardous reaction, the P₄O₁₀ should be added to the acid-alcohol solution and not the other way around.

The temperature of the organic alcohol with the in-situ prepared phosphation reagent admixed is then raised to complete the phosphation reaction. The times and temperatures required for reacting the phosphation reagent with the alcohol can be easily determined by those skilled in the art and are primarily a function of the mixing, pumping, and temperature control capabilities of the reactor and associated equipment. Reaction temperatures may range from 70° C to 110° C. Preferably, the temperature range of the reaction should be from about 75° C to about 100° C; most preferably from about 79° C to about 90° C. This cook temperature is essentially dictated by the need to obtain reasonably short reaction times without excessive discoloration of the product.

The formation of the solution, in-situ formation of the phosphation reagent, and the phosphation reaction should preferably take place under anhydrous conditions.

Typical batch process post-phosphoric anhydride addition cook times are from greater than 3 to about 12 hours depending upon the reaction temperature. Times from about 4 to about 11 hours are preferred for the preferred temperature range, and from about greater than 4 to about 7 most preferred, to prevent product degradation and color formation.

During the reaction process, a point is reached at which the principal remaining phosphate intermediates are the relatively unreactive pyrophosphates, which together with the alcohol are at low concentration. Since little additional beneficial change in the composition can be achieved by prolonged heating, it is expedient to add a small amount of water to complete the conversion of the pyrophosphates to orthophosphates. Upon completion of this step, the liquor is customarily cooled slightly and hydrogen peroxide is added to reduce the color. The amounts, delivery methods and time of insertion for the above optional additives are known to those skilled in the art and can be determined with minimum experimentation.

The organic hydroxy compounds which can be phosphated by the phosphation reagent of this invention are of the formula RO{CₙH₂ₙO}ₓH wherein R is selected from the group consisting of a saturated or unsaturated aliphatic C₁-C₃₀ straight or branched carbon chain, a phenyl, a mono-,di-,or tri-substituted phenyl, a phenyl C₁-C₆ alkyl and a mono-,di-,or tri-substituted phenyl C₁-C₆ alkyl, wherein the phenyl substituent group(s) each have a total of 1 to 30 carbon atoms, and wherein each substitution can be a saturated or unsaturated straight or branched carbon chain, a phenyl, an alkyl phenyl, a phenyl alkyl, or an alkyl phenyl alkyl group; wherein n is from 2 to 4 and may be the same or different for each alkylene oxide unit; and wherein x is from 0 to 100.

Examples of the preferred alcohols are lauryl, myristyl, and cetyl alcohols and their ethoxylates; blends thereof; and tristyrylphenol ethoxylates.

The characteristics of the above process for the formation of the phosphation reagent per se, the formation of the phosphation reagent in-situ, and its reaction with the alcohol medium to produce a phosphate ester product mixture, suggest that the processes would be adaptable to continuous processes, run either concurrently or consecutively. If part of a continuous process, the mixing (dissolution) and reaction (cook) temperatures could be higher because the residence times in the respective zones would be shorter.

The present invention will be explained in more detail with reference to the following non-limiting working examples.

### Example 1

### Preparation of Phosphation Reagent

A 2 l flask, fitted with an inert, dry gas inlet and outlet through a silicone fluid bubbler tube, a stirrer, thermometer, and screw-feed powder addition funnel was quickly charged with 190.5 g 105% phosphoric acid (Rhône-Poulenc Super Phos 105™) and the funnel with 218.9 g P₄O₁₀, against a positive, dry argon gas flow. The P₄O₁₀ was added to the gently stirred acid over a 42 minute period while maintaining the liquor temperature 30-35° C. Only 217.6 g P₄O₁₀ was actually transferred to the flask. The flask, containing an evenly dispersed, viscous, white slurry, was immersed in an oil bath which was heated to 100° C over a 53 minute period. After 10 additional minutes, during which time the mixture reached a maximum temperature of 88° C, the bath was lowered and the relatively easily stirred, uniform slurry was allowed to cool. The average composition was calculated to be 122.7% polyphosphoric acid (88.84% P₄O₁₀).

### Example 2

### Phosphation of Lauryl Alcohol

To 388.2 g of the phosphation reagent mixture in the flask in Example 1 was quickly added 911.7 g lauryl alcohol against a positive flow of argon. The mixture was warmed to 80° C with slow stirring at first, which was increased as the mixture warmed and the solids dispersed. After the solids had dissolved, the temperature was increased to 87° C and maintained for 290 minutes. Deionized water, (8.0 g), was then added to hydrolyze the residual pyrophosphate intermediates and after 30 minutes, during which time the temperature was allowed to drop to 78°C, 5.0 g of 15% hydrogen peroxide was added. The temperature and agitation were maintained for an additional 30 minutes, and the clear, nearly colorless liquor was cooled to 70° C and bottled.

The residual alcohol content, determined from the proton nuclear magnetic resonance spectrum, was 1.8 mole percent. The phosphate molar ratios, determined from quantitative phosphorus -31 nuclear magnetic resonance data, were 0.122 phosphoric acid, 0.776 monolauryl phosphate and 0.102 dilauryl phosphate. Conversion to weight percent gave 1.3% nonionic (residual alcohol), 4.6% phosphoric acid, 77.5% monolauryl phosphate and 16.7% dilauryl phosphate, for a MAP:DAP weight ratio of 82.3:17.7.

### Examples 3-7

To determine the effect of aging temperature on phosphation reagent performance, a series of experiments was run in which the aging time and temperature for the homogenization and equilibration of the phosphating species in the reagent was varied. For convenience, the 105% phosphoric acid was added to the P₄O₁₀.

Accordingly, the apparatus in Examples 1 and 2 was assembled and dried, except that a 1 l flask was used and the powder addition funnel was replaced with a pressure equalizing, liquid addition funnel. The funnel was charged with 110.9 g Super Phos 105™ polyphosphoric acid and the flask with 126.3 g P₄O₁₀. The acid was run into the stirred powder over a 10 minute period. Stirring was continued and the slurry temperature was allowed to rise to 55° C within 5 minutes. The oil bath was then raised, heated to 100° C in 15 minutes and maintained for an additional two hours before being lowered to mark the end of the aging period. The slurry was allowed to cool to 23° C, at which point it was barely stirrable (only a few rpm). Lauryl alcohol, 524.1 g, was quickly added. The mixture was heated to 80° C with a brief overshoot to 92° (heat of reaction) and back within 20 minutes. A temperature of 78-82° C was maintained for five hours after the solids had dissolved, 3.8 g deionized water was added and, after two more hours at 82° C, the clear liquid was cooled slightly and bottled warm before it solidified.

Analysis showed the phosphate molar ratios to be 0.157 phosphoric acid, 0.746 monolauryl phosphate, and 0.097 dilauryl phosphate. The residual alcohol (percent nonionics) was determined by a standard ion exchange resin method to be 2.3 weight percent, allowing calculation of the remaining components to be 5.9% phosphoric acid, 75.8% monolauryl phosphate, and 16.0% dilauryl phosphate with a MAP:DAP weight ratio of 82.5:17.5.

Similar experiments were run in which the aging time was varied from over two hours to essentially none. In the latter case, the alcohol was added 13 minutes after the acid and P₄O₁₀ had been combined, to allow only for the temperature excursion from the heat of reaction to peak at 68° C and the P₄O₁₀ powder to be wetted and blended into the slurry. Oil bath temperatures for all but the above special example in this series, were set at from 60 to 220° C in 40° increments. The results in Table 1 show that phosphate compositions which exceed the 80:20 weight ratio are produced by the phosphation reagent under all of the times and temperatures evaluated except the high temperature (220° C) extreme, which produced a hard, discolored, material which was not evaluated further.

### Examples 8-10

The apparatus and procedures utilized in the balance of the Examples are those used in Examples 3-7 except as indicated. The effect of the concentration of the phosphoric acid used to prepare the phosphation reagent was determined in the next series, also reported in Table 1, in which aging periods were again varied and both orders of addition were used. The results show that the entire commercial range of phosphoric acid, from 85 to 115%, can be used to prepare a phosphation reagent which consistently produces a product with a MAP:DAP weight ratio above 80:20, combined with a low level of unreacted alcohol and phosphoric acid.

### Example 11

In an attempt to further reduce the phosphoric acid level in the final product mixture, a higher molar ratio of alcohol to P₄O₁₀ was evaluated.

In the apparatus described in Example 3, the 1 l flask was charged with 97.8 g P₄O₁₀ under a positive flow of dry argon and 86.5 g Super Phos 105™ was added at ambient, 23°C, temperature to the gently stirring powder over a 35 minute period. The temperature reached a maximum of 60° at 20 minutes with about 60% of the acid added. The remainder of the acid converted the wetted, clumpy mixture into a smooth, white, fudge-like substance. The viscosity increased as the temperature returned to ambient, so the stirring rate was reduced to about 8 rpm. As the mixture was reheated to the 100° C (oil bath) aging temperature, the viscosity decreased again, as expected. At 22° C, the material was still stirrable, but with difficulty. Heating to 28° C significantly improved the stirring efficiency and by 42° C, the material was again conveniently stirrable at 25 rpm. The phosphation reagent was continuously stirred for two hours in the bath at 100° with relatively little change; then allowed to cool.

With the phosphation reagent at 36° C, (oil bath 50°), 496.2 g lauryl alcohol was added in about two minutes. This gave a molar ratio of alcohol to total phosphorus, expressed as P₄O₁₀, of 4.75:1.00 (1.19 mole alcohol per mole phosphorus). The liquor temperature of the easily stirred mixture leveled off at the 50° C bath temperature in 15 minutes without overshooting, so it was warmed to 80° C where the temperature and stirring were maintained for nine hours. Deionized water (3.5 g) was added; 80-82°C was maintained for two additional hours; the mixture cooled; and then bottled before solidification.

The phosphate molar ratios were 0.116 phosphoric acid, 0.783 monolauryl phosphate and 0.101 dilauryl phosphate. The residual alcohol determined as percent-nonionics was 16.8% with the weight percent of the phosphates then calculated to be 3.6% phosphoric acid, 65.7% monolauryl phosphate and 13.9% dilauryl phosphate for a MAP:DAP ratio of 82.5:17.5. A slight decrease, therefore, was observed in the phosphoric acid, the MAP:DAP ratio was not affected, and the excess alcohol essentially remained as a nonionic diluent.

### Examples 12 - 16

The results in Table 1 for Examples 12 - 16, inclusive, demonstrate that the critical variable is the composition of the phosphation reagent itself. In this series, the reagent was prepared by addition of the Super Phos 105™ to the phosphoric anhydride.

The range evaluated essentially defines the surprisingly narrow range required to produce the desired ester compositions. The upper limit of the concentration also approached the practical limit from the standpoint of reagent transfer. In contrast to the simplicity and convenience of the 122.5% composition in Example 11, the viscosity of the 125% phosphation reagent of Example 13 was so high that an oil bath temperature of 140° was required to maintain good stirring within the limitations of the laboratory apparatus during the aging period. The phosphation reagent dissolution rate was also significantly slower. The 127% phosphation reagent composition did not blend into a smooth, uniform mixture, but rather agglomerated into wet clumps which could be moved by the stirrer blade but not stirred efficiently. A 100° C oil bath curing temperature was used, but it effected little apparent change on this high P₄O₁₀ content reagent.

The lower levels of the reagent, i.e. 119.9% and 115.1% were prepared and used without complication.

The results show, as expected, an increase in the MAP:DAP ratio, as the composition shifts from phosphoric anhydride rich to polyphosphoric acid rich. The 70:30 MAP:DAP ratio produced by the 125% composition is the lower limit of the product mixtures shown to have useful foaming and solubility properties (H. Mori et al. U. S. Patent 5,254,691, October 19, 1993) and considering other process factors such as viscosity and dissolution rates, defines the upper limit of the desirable composition range. The results for the 127% composition show it to be beyond the desirable composition range.

The MAP:DAP ratio produced by the 119.9% composition was in the favorable range established by the earlier examples, but the residual phosphoric acid and alcohol levels both increased noticeably. These trends were more pronounced for the 115% composition, Example 15. A control experiment in which 115% polyphosphoric acid was used directly for the phosphation, Example 16, produced similar results showing the phosphation-reagent composition and process offers no advantage at that concentration. The upper limit of commercial processes in which polyphosphoric acid is produced by orthophosphoric acid dehydration is about 117.5% because of the excessively high viscosities resulting from the long anhydride polymer chains. The lower viscosities of even the higher strength phosphation reagents of this invention are much more easily handled in a commercial process. Since the phosphation reagent performs as though it were a polyphosphoric acid at the 115% concentration, it would be expected to provide a continuum of compositions with its pragmatic lower limit being that at which use of commercially available polyphosphoric acid becomes impractical, about 117-118%.

The following two examples demonstrate that the novel phosphation reagent can be prepared in-situ by treatment of an alcoholic solution of the phosphoric acid component with phosphoric anhydride.

### Example 17. Lauryl Phosphate

A predried, 12 l flask equipped as in Example 1 was charged with 7897.5 g lauryl alcohol (n-dodecanol) against a positive flow of argon. The liquor temperature equilibrated to 28° C in a warm heating mantle. The addition funnel was charged with 115% polyphosphoric acid, 2261.1g of which was then added to the stirred alcohol. Gentle heat was applied initially, to prevent freezing and expedite dissolution. The maximum temperature was 42°C.

The funnel was quickly replaced by a 1 l flask containing 1132.2 g phosphoric anhydride connected to the reaction flask through two standard taper glass joints and a rubber hose. Air moisture was excluded by a positive flow of dry argon during the operation.

The solution was cooled to 32° C. Phosphoric anhydride was then added with rapid stirring over a 70 minute period during which the temperature rose to 55° with a gradual, continuing increase to level out at 59° C over the next 40 minutes. Correction for the 2.5 g flask residue gave a charge of 1129.7 g, slightly in excess of the planned charge, so an additional 4.0 g of 115% phosphoric acid and 26.5 g lauryl alcohol were added. Final reagent charges were 42.52 mole lauryl alcohol, 26.58 mole phosphorus from the polyphosphoric acid and 3.98 mole phosphoric anhydride (15.92 mole phosphorus). The average phosphation reagent composition was 122.7% expressed as polyphosphoric acid and the molar ratio of alcohol to phosphorus was 1.0006:1.0000.

The slurry was heated to 82° C and maintained at 85 ± 3° C for 11 hours. The resulting pale yellow, clear solution was then cooled to 65° C, and 23.3 g 35% hydrogen peroxide was added to produce a water-white liquid, which was bottled while warm. Analysis by conventional wet and phosphorus-31 nuclear magnetic resonance spectroscopy methods showed the phosphate molar ratios to be 0.126 phosphoric acid, 0.786 monolauryl phosphate and 0.088 dilauryl phosphate. The weight percent nonionics was 0.4 and the phosphoric acid and the phosphates 4.7%, 80.2%, and 14.7%, respectively, resulting in a MAP:DAP weight ratio of 84.5:15.5.

### Example 18. Lauryl Phosphate

In the same manner as in Example 17, the 12 l flask was charged with 6996.5 (37.547 mole) lauryl alcohol. The 115% polyphosphoric acid was warmed in the addition funnel by an infrared heat lamp to reduce its viscosity and reduce its addition time. The liquor reached a maximum of 62° C within 30 minutes after the addition of the 2003.1 g (23.508 moles phosphorus) of polyphosphoric acid and the solution became clear. It was quickly cooled to 31°C. Phosphoric anhydride was added over a 195 minute period during which the temperature reached 56° C; total charge by difference was 1004.8 g (3.5395 mole; 14.158 moles phosphorus). The ratio of moles alcohol to phosphorus was 0.9968:1.0000. The calculated average composition of the phosphation reagent was 122.7% H₃PO₄.

The easily stirred slurry was heated to 81 ± 1° C and maintained for seven hours, then allowed to cool overnight. The white solid was remelted at about 51° C, heated to 80° C, and 31.0 g deionized water was added. After two hours at 80° C, the clear, pale yellow liquor was cooled to 63° C and bleached with 20.0 g 35% hydrogen peroxide. The liquor was heated for transfer because the crystals began freezing out at about 61° C.

The nonionic component was only 0.8 weight percent. The phosphate molar ratios were 0.119 phosphoric acid, 0.794 monolauryl phosphate and 0.087 dilauryl phosphate. Weight composition was 4.4%, 80.4% and 14.4%, respectively, with a MAP:DAP ratio of 84.8:15.2.

### Comparative Example 1. Two Step Process:

### Reaction of Lauryl Alcohol with Polyphosphoric Acid Prior to Phosphoric Anhydride Addition

In a 1 l flask equipped similarly to Example 1, 81.1 g 105% phosphoric acid (0.430 mole phosphoric acid, 0.179 mole pyrophosphoric acid and 0.027 mole tripolyphosphoric acid) and 37.0 g dodecyl (lauryl) alcohol (0.20 mole) were combined at room temperature. The temperature of the stirred solution rose to a maximum of 35° C in 10 minutes. The mass was then heated to 72° where it was maintained for 14 hours. The phosphate composition by P NMR analysis of the viscous, creamy mass was 0.600 mole phosphoric acid, 0.179 mole monolauryl phosphate, and 0.045 mole pyrophosphoric acid, verifying substantial conversion of the polyphosphoric acid components and absence of dialkyl phosphate.

To 98.0 g of the above mixture was added 302.6 g of lauryl alcohol (1.624 mole) and the liquor heated to 52° C to dissolve the phosphate mixture heel. The solution thus containing phosphoric acid and the alcohol phosphate was cooled to 30° C and 74.9 g phosphoric anhydride was added in nearly equal portions, 25 minutes apart. The temperature rose from 41° C to a maximum of 61° C 10 minutes after completion of the addition. The liquor was then heated to 80° C and maintained for 18 hours, 2.4 g deionized water was added, the mixture stirred at 80° C for two hours, cooled to 60° C and bottled.

The total raw materials charged were 1.788 mole lauryl alcohol (0.164 mole in heel, 1.624 in step two), 0.719 mole phosphorus (as 105% polyphosphoric acid), and 0.264 mole phosphoric anhydride (1.055 mole phosphorus). The calculated phosphation reagent average composition was 122.7% polyphosphoric acid, and the molar ratio of alcohol to phosphorus was 1.008:1.000. The product phosphate molar ratios were 0.146 phosphoric acid, 0.730 monolauryl phosphate and 0.124 dilauryl phosphate. The weight composition was 1.0% nonionics, 5.4% phosphoric acid, 73.3% lauryl phosphate and 20.3% dilauryl phosphate, with a a MAP:DAP ratio of 78.3:21.7. This composition is below the 80:20 ratio regarded as the minimum for a desirable monoalkyl phosphate composition and further below the 85:15 ratio obtained by the process modification of this invention, even though the amount of lauryl phosphate produced in the first step consumed only about 10% of the total alcohol and phosphation reagent charge and contained no dialkyl phosphate coproduct.

The process of the instant invention is decidedly superior to the published Comparative Example 1. in U. S. Patent 4,350,645, in which the phosphoric anhydride apparently was not added entirely under controlled, lower temperature conditions to minimize direct reaction between the phosphoric anhydride and alcohol. The high amount of dialkyl phosphate characteristic of that reaction is reflected in the final product molar composition, which was 0.149 phosphoric acid, 0.662 monolauryl phosphate and 0.189 dilauryl phosphate (conversion of MAP:DAP molar ratio to weight ratio gives 68.2:31.8) even though the overall reagent ratios are an average composition of 122.5% polyphosphoric acid equivalent for the phosphation reagent and the alcohol to phosphorus molar ratio is 1.00:1.00.

### Comparative Examples 2 and 3

The following experiments were conducted with regard to Japanese Patent Publication 42-6730.

### Comparative to Example 1 of 42-6730

To a 500 ml flask equipped as in Example 1 of this application was charged 186.31 g dodecyl alcohol against a positive flow of argon gas. Phosphoric acid, 85%, 23.40 g, was added to the stirred, preheated alcohol over an 11 minute period with the temperature being maintained at 42-44°C. The liquor temperature was allowed to drop naturally to 38° C over seven minutes and maintained at 35-38° C for two hours with continued stirring. The liquid addition funnel was replaced by an airtight, screw-feed, pressure equalizing powder addition funnel containing phosphoric anhydride and 56.72 g was added with stirring and intermittent cooling over a 131 minute interval to maintain the temperature at 38-39° C. The liquor temperature was raised to 60° C in 35 minutes and held at 63-64° C for most of the three hour post addition cook period. The liquor was allowed to cool to 58° C during a four minute period thereafter, during which a 22.18 g sample was removed.

The liquor was then diluted with 224.54 g anhydrous ethanol and transferred quantitatively to a 3000 ml flask with five washings of anhydrous ethanol; total ethanol diluent weight was 1215.23 g. The solution was heated to reflux in accord with the work up procedure described in the body of 42-6730. A portion of the solution was removed and the ethanol removed under vacuum.

Analysis of the first sample, taken after completion of the process claimed in 42-6730, by quantitative C-13 nuclear magnetic resonance showed the integral ratio between the residual alcohol and the combined alkyl phosphate alpha-carbon signals to be 7.3:92.7, the total integral of these groups agreeing with the value for the terminal methyl group and well resolved individual, internal methylene signals. The P-31 nuclear magnetic resonance spectrum showed the mixture to still contain 13.8 mole percent pyrophosphate intermediates. In view of the 7.3 mole percent unreacted alcohol, and the 13.8 mole percent residual pyrophosphates, it would be impossible to achieve the 94.7% yield of monododecyl phosphate ester as reported by the Japanese Patent Publication 42-6730 without further reaction.

Analysis of the mixture concentrated after the ethanol work-up showed the amount of pyrophosphate intermediates to have been reduced to about 6.8 mole percent, with an approximately even split between the alkyl and non-alkylated groups. The monoalkyl and dialkyl orthophosphate signal regions now both contained overlapping signals, indicating the formation of ethyl as well as dodecyl substituted phosphates; i.e., some of the dialkyl phosphates could contain both an ethyl and dodecyl group and monoethyl phosphate was produced.

The C-13 spectrum similarly confirmed formation of ethyl phosphate species, but at an approximately 12:88 mole ratio to the dodecyl phosphate signals. This ratio of about double that expected from reaction with the portion of the pyrophosphates which were consumed, was explained by the 5 mole percent increase observed in the residual dodecyl alcohol, to 12.3%. Apparently, a small amount of transesterification had occurred.

In a separate experiment, the absence of alkyl phosphates in the dodecyl alcohol - 85% phosphoric acid solution after the first "reaction" period (i.e. only orthophosphoric acid was present) was confirmed. Additionally, the two portions of the product mixture purified by separation of the precipitated product from the ethanol soluble product were analyzed. The P-31 spectrum of the filter cake showed molar ratios of 8.6% phosphoric acid, 53.5% monoalkyl phosphates and 37.9% dialkyl phosphates. The solid obtained by evaporation of the ethanol from the filtrate was 15.5% phosphoric acid, 77.5% monoalkyl phosphates and 7.0% dialkyl phosphates. An efficient separation was therefore not achieved in the purification step; monododecyl phosphate was removed in the filter cake and didodecyl phosphate was carried over into the ethanol solution.

### Comparative to Example 2 of 42-6730

To a 500 ml flask equipped as in the above comparative example, was added 195.06 g 2-ethylhexyl alcohol under argon. The liquor was warmed to 70° C and the addition of 85% phosphoric acid was initiated. After 18 minutes, the addition was stopped, for a total of 28.88 g, with the temperature having risen to 73° C. Samples of 10.09 g and 9.74 g were removed after 12 and 77 minutes, the temperature being maintained at 72-73° C. The P-31 NMR spectrum confirmed that only phosphoric acid was present in both cases; no reaction with alcohol to form esters had occurred.

The solution was cooled to 41° C and, correcting for the mass removed as samples, 96.73 g phosphoric anhydride was added over a 98 minute period during which the temperature was allowed to rise gradually to 47° C. The reaction was continued at the "same temperature" for 30 minutes, as stated in the 42-6730 example (actually, the temperature rose to 48° C). Since the mixture was still cloudy with some clumps of phosphoric anhydride remaining, 25.55 g was removed for analysis. The molar ratios of the signals in the orthophosphate (ca. - 1ppm) to pyrophosphate (ca. - 13 ppm) to higher polyphosphate (ca. - 27 ppm) regions were 23.7: 64.7: 11.6, indicating limited conversion. The liquor was, therefore, heated over the next hour to 70° C to begin a second 30 minute reaction period at 70 -79° C, assuming "same temperature" meant that which as was used for the phosphoric acid "reaction" period. Analysis of a fresh 25.87 g sample of the mixture after this period showed the ratios between signals in the orthophosphate, pyrophosphate and polyphosphate regions to be 40.4:55.4:4.2, still indicative of very incomplete conversion.

The remaining liquor was diluted with 230.60 g anhydrous ethanol and washed into a 2000 ml flask with three volumes of fresh ethanol for a total of 1251.03 g diluent. The solution was then heated to reflux, heating continued for 20 minutes, then the liquor was allowed to cool naturally in the oil bath and sampled. The clear solution was refrigerated at + 10° C and checked periodically for crystal formation. None was observed over a seven day period, so the work-up was discontinued.

The P-31 spectrum of the final sample, after concentration, showed it to still contain a significant proportion of pyrophosphate intermediates in molar ratio of 32.0:68.0 to the orthophosphates. The pyrophosphate six-signal pattern was essentially the same as that observed from the sample taken prior to the ethanol treatment indicating the only significant change had been conversion of a portion of the pyrophosphates to orthophosphates. The two orthophosphate ester peaks (mono and dialkyl) now both had smaller side peaks showing the presence of the ethyl as well as the 2-ethylhexyl groups of each product.

The C-13 NMR spectrum confirmed the formation of the ethyl substituted as well as 2-ethylhexyl substituted mono- and dialkyl phosphates. The mole ratio of ethyl to 2-ethylhexyl phosphate groups was 21:79.

Although the amount of the various phosphorus species would be difficult to calculate from the final spectra because of the overlap of the ethyl and 2-ethylhexyl signals, an estimate of a final composition which would have been produced from the pre-ethanol treated mixture can be calculated if one made the reasonable assumptions that the pyro and tripolyphosphate intermediates were converted to orthophosphates only by reaction with 2-ethylhexyl alcohol and no significant transesterification occurred. (In this example, such complete conversion would not have occurred because the phosphation reagent was in excess!). The mole percentages of the thus estimated composition would be 12.6% phosphoric acid, 63.9% mono(2-ethylhexyl) phosphate and 23.6% di(2-ethylhexyl) phosphate. Conversion to normalized weight percentages (values would be lower if residual alcohol were present) would be 5.5 weight percent phosphoric acid, 60.3 weight percent mono- (2-ethylhexyl) phosphate and 34.2% di(2-ethylhexyl) phosphate. The calculated MAP:DAP weight ratio would be 63.9:36.1.

The above data show that the claimed procedure was not sufficient to complete the conversion of either the alcohol or phosphorus reagents to orthophosphates. No formation of alkyl phosphates occurred in the first stage reaction of 85% phosphoric acid with the alcohol and completion of the reaction after the phosphoric anhydride addition required the work up procedure involving dissolution in a large excess of ethanol and yet another, additional, undefined heating period to complete the conversion.

In both examples, the product mixtures before and even after the second stage reaction with ethanol, produced mixtures containing such high levels of residual starting alcohol, residual phosphoric acid and/or dialkyl phosphate that the 94.7 and 90.2% yields of monoalkyl phosphate reported were not present at any time during the process.

Finally, the second example using a phosphation reagent composition effectively equivalent to 125.9 weight percent polyphosphoric acid, approaching the upper end of the 91.4 to 126.8% range described in the 42-6730 case was beyond the 125% maximum useful concentration defined herein and, as expected, produced a weight ratio lower than the 70:30 monoalkyl dialkyl phosphate defined as functionally, but marginally acceptable in performance (See Examples 12 and 13 in appended Table 1) and certainly lower than the preferred 80:20 ratios produced in the present invention.

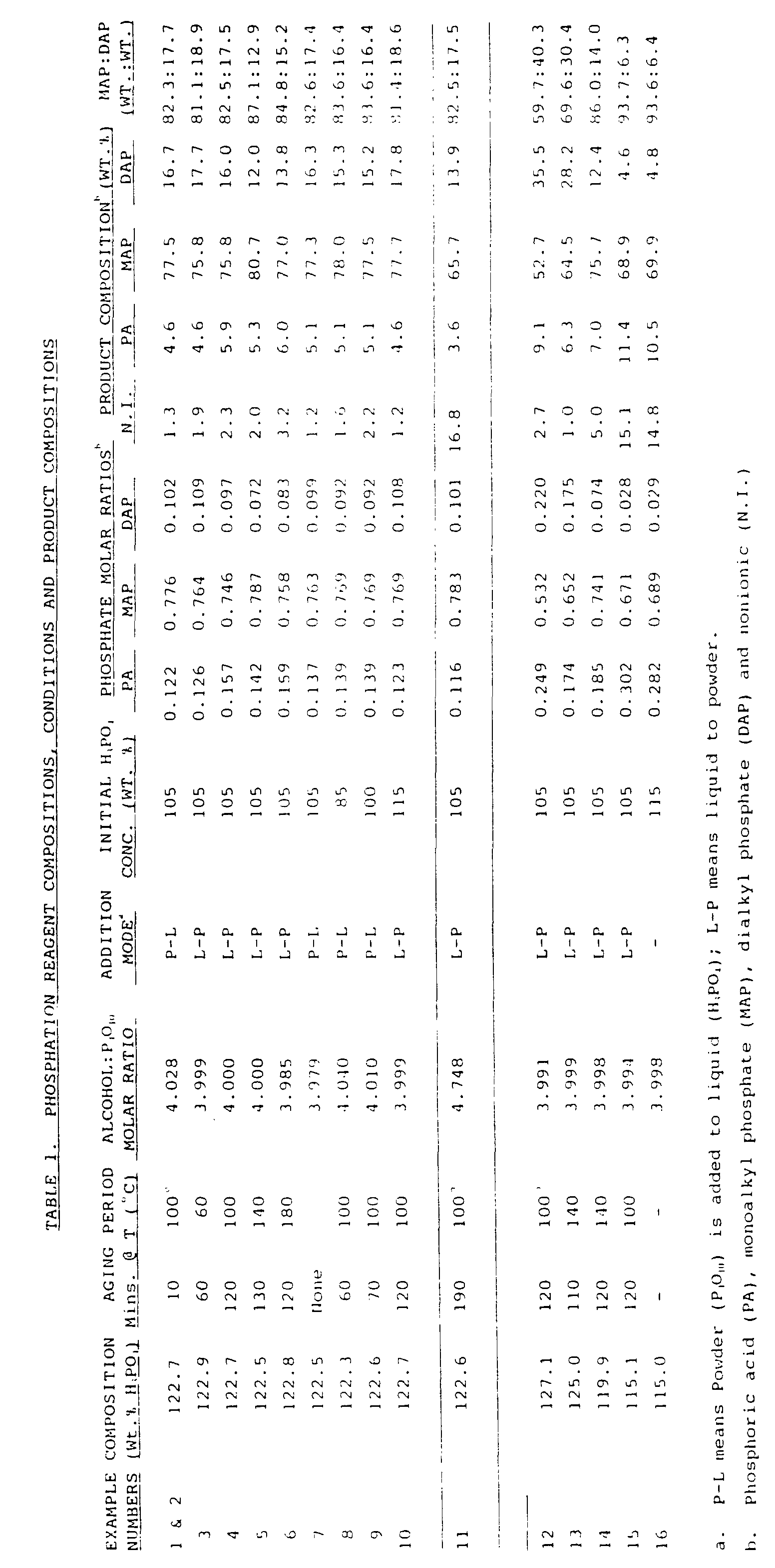

## Claims

1. Process for the production of monoalkyl phosphoric acid ester compositions comprising :
A) contacting :
a) at least one alcohol of the formula RO{CₙH₂ₙO}ₓH wherein R is selected from the group consisting of saturated or unsaturated aliphatic C₁-C₃₀ straight or branched carbon chain, a phenyl, a mono-, di- or tri-substituted phenyl, a phenyl C₁-C₆ alkyl and a mono-, di-, or tri-substituted phenyl C₁-C₆ alkyl, wherein the phenyl substituent group(s) each have a total of 1 to 30 carbon atoms, and wherein each substitution can be a saturated or unsaturated straight or branched carbon chain, a phenyl, an alkyl phenyl, a phenyl alkyl, or an alkyl phenyl alkyl group ; wherein n is from 2 to 4 and may be the same or different for each alkylene unit; and wherein x is from 0 to 100 ; with
b) a phosphation reagent, which is a uniform slurry or paste having an effective equivalent phosphoric acid weight % of from about 118 to 125, and which is obtained by:
i) intimately mixing and exclusively reacting at from ambient temperature to about 180°C, an effective amount of phosphoric anhydride with from about 75 weight % to about 117 weight % of phosphoric acid (54 weight % to 85 weight % P₄O₁₀) to produce said uniform slurry or paste ;
ii) isolating said slurry or paste ; and
B) reacting the mixture.

2. Process according to claim 1, in which step A) is carried out at from about ambient room temperature to about 80°C, or the ultimate cook temperature, and step B) is carried out at from about 75°C to about 100°C for a reaction time of from about 3 to about 12 hours preferably from about 4 to 11 hours.

3. Process according to any one of the preceding claims, wherein the alcohol and the phosphation reagent are used with a substantially equimolar ratio alcohol-phosphorus.

4. Process according to any one of the preceding claims, wherein in the monoalkyl phosphoric acid ester compositions, the monoalkyl to dialkyl phosphate weight ratio is greater than 80:20, the weight percent of the residual alcohol and of the residual phosphoric acid are individually each less than 6.

5. Process for the production of monoalkyl phosphoric acid ester compositions, comprising the steps of:
A) preparing a phosphoric acid-alcohol reactant solution by dissolving, at a temperature which corresponds to essentially non-reactive conditions,
a) from about 75 weight % to about 117 weight % phosphoric acid in
b) at least one alcohol of the formula RO{CₙH₂ₙO}ₓH wherein R is selected from the group consisting of saturated or unsaturated aliphatic C₁-C₃₀ straight or branched carbon chain, a phenyl, a mono-, di- or tri-substituted phenyl, a phenyl C₁-C₆ alkyl and a mono-, di-, or tri-substituted phenyl C₁-C₆ alkyl, wherein the phenyl substituent group(s) each have a total of 1 to 30 carbon atoms, and wherein each substitution can be a saturated or unsaturated straight or branched carbon chain, a phenyl, an alkyl phenyl, a phenyl alkyl, or an alkyl phenyl alkyl group ; wherein n is from 2 to 4 and may be the same or different for each alkylene unit; and wherein x is from 0 to 100,
B)
i) intimately blending into said reactant solution and
ii) reacting the phosphoric acid in said reactant solution with a stoichiometrically effective amount of phosphoric anhydride to produce in-situ a phosphation reagent, having an effective equivalent phosphoric acid weight percent of from about 118 to 125 ;
iii) the temperature at which the phosphoric anhydride is blended and reacted with the phosphoric acid in the alcohol medium does not exceed 60°C; and ;
C) reacting the phosphation reagent so produced with the alcohol medium at from about 75°C to about 100°C for a reaction time of from 3 to 12 hours.

6. Process according to claim 5, wherein step A) is carried out at a temperature which does not exceed 65°C.

7. Process according to any one of claims 5 and 6, wherein the alcohol and the phosphation reagent are used with a substantially equimolar ratio alcohol-phosphorus.

8. Process according to any one of claims 5 to 7, wherein, in the monoalkyl phosphoric acid ester compositions, the monoalkyl to dialkyl phosphate weight ratio is greater than 80:20, the weight percent of the residual alcohol and of the residual phosphoric acid are individually each is less than 6.

9. Process according to any one of the preceding claims, wherein the alcohol is chosen among lauryl, myristyl, cetyl alcohols, their ethoxylates and their blends, and tristyrylphenol ethoxylate.

10. Process according to anyone of the preceding claims, wherein the effective equivalent phosphoric acid weight % of the phosphation reagent is from about 119 to 124.

11. Process according to claim 10, wherein the effective equivalent phosphoric acid weight % of the phosphation reagent is from about 121 to 123.

## Patentansprüche

1. Verfahren zur Herstellung von Monoalkylphosphorsäureester-Zusammensetzungen, wobei das Verfahren umfaßt:
A) In Kontakt bringen von
a) mindestens einem Alkohol der Formel RO(CₙH₂ₙO)ₓH, wobei in der Formel R ausgewählt wird aus der Gruppe von linearen oder verzweigten, gesättigten oder ungesättigten aliphatischen C₁-C₃₀-Kohlenstoffketten, einem Phenylrest, einem einfach, zweifach oder dreifach substituierten Phenylrest, einem Phenyl-C₁-C₆-Alkylrest und einem einfach, zweifach oder dreifach substituierten Phenyl-C₁-C₆-Alkylrest, wobei die Phenylsubstituentengruppe(n) jeweils 1 bis 30 Kohlenstoffatome aufweist/aufweisen und wobei jeder Substituent eine lineare oder verzweigte, gesättigte oder ungesättigte Kohlenstoffkette sein kann, einer Phenyl-, einer Alkylphenyl-, einer Phenylalkyl- oder einer Alkylphenylalkylgruppe, wobei n 2 bis 4 beträgt und identisch oder verschieden fiir jede Alkyleneinheit sein kann und wobei x 0 bis 100 beträgt; mit
b) einem Phosphatierungsreagenz in Form einer einheitlichen Masse oder Paste mit einem wirksamen Äquivalentgewichtsprozent von ungefähr 118 bis 125 an Phosphorsäure, welches erhalten wird durch:
i) gründliches Vermischen und ausschließliche Reaktion einer wirksamen Menge an Phosphorsäureanhydrid mit ungefähr 75 Gew.-% bis ungefähr 117 Gew.-% Phosphorsäure (54 Gew.-% bis 85 Gew.-% P₄O₁₀) bei Temperaturen von Raumtemperatur bis ungefähr 180 °C zur Herstellung der einheitlichen Masse oder Paste;
ii) Isolierung dieser Masse oder Paste; und
B) Reaktion der Mischung.

2. Verfahren nach Anspruch 1, wobei Schritt A) bei Temperaturen von ungefähr Raumtemperatur bis ungefähr 80 °C oder höchstens Kochtemperatur durchgeführt wird und Schritt B) bei Temperatur von ungefähr 75 °C bis ungefähr 100 °C für eine Reaktionsdauer von ungefähr 3 bis ungefähr 12 Stunden, vorzugsweise von ungefähr 4 bis 11 Stunden, durchgeführt wird.

3. Verfahren nach einem der vorhergehenden Ansprüche, wobei der Alkohol und das Phosphatierungsreagenz mit einem im wesentlichen äquimolaren Verhältnis von Alkohol zu Phosphor verwendet werden.

4. Verfahren nach einem der vorhergehenden Ansprüche, wobei in den Monoalkylphosphorsäureester-Zusammensetzungen das Gewichtsverhältnis von Monoalkyl- zu Dialkylphosphat größer als 80:20 ist und die Gewichtsprozente des restlichen Alkohols und der restlichen Phosphorsäure jeweils für sich kleiner als 6 sind.

5. Verfahren zur Herstellung von Monoalkylphosphorsäureester-Zusammensetzungen, wobei das Verfahren die folgenden Schritte umfaßt:
A) Herstellung einer Phosphorsäure-Alkohol-Reaktionslösung bei einer Temperatur, die im wesentlichen nicht-reaktiven Bedingungen entspricht, durch Auflösen von
a) ungefähr 75 Gew.-% bis ungefähr 117 Gew.-% Phosphorsäure in
b) mindestens einem Alkohol der Formel RO(CₙH₂ₙO)ₓH, wobei in der Formel R ausgewählt wird aus der Gruppe von linearen oder verzweigten, gesättigten oder ungesättigten aliphatischen C₁-C₃₀-Kohlenstoffketten, einem Phenylrest, einem einfach, zweifach oder dreifach substituierten Phenylrest, einem Phenyl-C₁-C₆-Alkylrest und einem einfach, zweifach oder dreifach substituierten Phenyl-C₁-C₆-Alkylrest, wobei die Phenylsubstituentengruppe(n) jeweils 1 bis 30 Kohlenstoffatome aufweist/aufweisen und wobei jeder Substituent eine lineare oder verzweigte, gesättigte oder ungesättigte Kohlenstoffkette sein kann, einer Phenyl-, einer Alkylphenyl-, einer Phenylalkyl- oder Alkylphenylalkylgruppe, wobei n 2 bis 4 beträgt und identisch oder verschieden für jede Alkyleneinheit sein kann und wobei x 0 bis 100 beträgt;
B)
i) gründliches Vermischen in diese Reaktionslösung und
ii) Reaktion der Phosphorsäure in dieser Reaktionslösung mit einer stöchiometrisch wirksamen Menge an Phosphorsäureanhydrid zur in-situ-Herstellung eines Phosphatierungsreagenz, das ein wirksames Aquivalentgewichtsprozent an Phosphorsäure von ungefähr 118 bis 125 aufweist;
iii) wobei die Temperatur, bei der das Phosphorsäureanhydrid mit der Phosphorsäure in dem alkoholischen Medium vermischt wird und reagiert nicht größer als 60 °C ist, und
C) Reaktion des so hergestellten Phosphatierungsreagenz mit dem alkoholischen Medium bei Temperaturen von ungefähr 75 °C bis ungefähr 100 °C bei einer Reaktionsdauer von 4 bis 11 Stunden.

6. Verfahren nach Anspruch 5, wobei Schritt A) bei einer Temperatur durchgeführt wird, die 65 °C nicht übersteigt.

7. Verfahren nach Anspruch 5 oder 6, wobei der Alkohol und das Phosphatierungsreagenz mit einem im wesentlichen aquimolaren Verhältnis von Alkohol zu Phosphor verwendet werden.

8. Verfahren nach einem der Ansprüche 5 bis 7, wobei in den Monoalkylphosphorsäureester-Zusammensetzungen das Gewichtsverhältnis von Monoalkyl- zu Dialkylphosphat größer als 80:20 ist und die Gewichtsprozente des restlichen Alkohols und der restlichen Phosphorsäure jeweils fiir sich kleiner als 6 sind.

9. Verfahren nach einem der vorhergehenden Ansprüche, wobei der Alkohol ausgewählt wird aus Lauryl-, Myuistyl-, Cetylalkohol, ihren Ethoxylate und ihren Mischungen, und Tristyrylphenolethoxylat.

10. Verfahren nach einem der vorhergehenden Ansprüche, wobei das wirksame Äquivalentgewichtsprozent an Phosphorsäure des Phosphatierungsreagenz ungefähr 119 bis 124 beträgt.

11. Verfahren nach Anspruch 10, wobei das wirksame Äquivalentgewichtsprozent an Phosphorsäure des Phosphatierungsreagenz ungefähr 121 bis 123 beträgt.

## Revendications

1. Procédé de production de compositions d'esters d'acides monoalkylphosphoriques, comprenant :
A) la mise en contact :
a) d'au moins un alcool de formule RO{CₙH₂ₙO}ₓH, dans laquelle R est sélectionné parmi le groupe constitué d'un radical de chaîne carbonée en C₁-C₃₀, aliphatique, saturé ou insaturé, linéaire ou ramifié, d'un radical phényle, d'un radical phényle mono, di ou tri substitué, d'un radical phénylalkyle en C₁-C₆ et d'un radical phénylalkyle en C₁-C₆, mono, di, ou tri substitué, dans lequel le ou les groupements substituents du radical phényle ont chacun un total de 1 à 30 atomes de carbone , et dans laquelle chaque substitution peut être une chaîne carbonée saturée ou insaturée, linéaire ou ramifiée, un radical phényle, un radical alkylphényle, un radical phénylalkyle, ou un groupement alkylphénylalkyle ; dans laquelle n va de 2 à 4 et peut être identique ou différent pour chaque unité alkylène ; et dans lequel x va de 0 à 100 ; avec
b) un réactif de phosphatation, qui est une suspension ou une pâte homogène ayant un % en poids d'acide phosphorique équivalent efficace d'environ 118 à environ 125, et qui est obtenu :
i) en mélangeant de manière intime et en faisant réagir exclusivement, de la température ambiante à la température d'environ 180°C, une quantité efficace d'anhydride phosphorique avec environ de 75 % en poids à environ 117 % en poids d'acide phosphorique (54 % en poids à 85 % en poids de P₄O₁₀) pour produire ladite suspension ou pâte homogène ;
i) en isolant ladite suspension ou pâte ; et
B) la mise en réaction du mélange.

2. Procédé selon la revendication 1, dans lequel l'étape A) est effectuée à une température allant de la température ambiante à la température d'environ 80°C ou à la température de cuisson ultime, et dans lequel l'étape B) est effectuée à une température allant d'environ 75°C à environ 100°C pendant une durée de réaction allant d'environ 3 à environ 12 heures, de préférence d'environ 4 à 11 heures.

3. Procédé selon l'une quelconque des revendications précédentes, **caractérisé en ce que** l'alcool et le réactif de phosphatation sont utilisés avec un rapport alcool-phosphore substantiellement équimolaire.

4. Procédé selon l'une quelconque des revendications précédentes, **caractérisé en ce que**, dans les compositions d'esters d'acides monoalkylphosphoriques, le rapport pondéral phosphate monoalkyle à phosphate dialkyle, est supérieur à 80 : 20, **en ce que** les pourcentages en poids de l'alcool résiduel et de l'acide phosphorique résiduel sont individuellement chacun inférieurs à 6.

5. Procédé de production de compositions d'esters d'acides monoalkylphosphoriques, comprenant les étapes :
A) de préparation d'une solution de réactifs acide phosphorique-alcool par dissolution, à une température qui correspond à des conditions essentiellement non réactives,
a) d'environ 75 % en poids à environ 117 % en poids d'acide phosphorique dans
b) au moins un alcool de formule RO{CₙH₂ₙO}ₓH, dans laquelle R est sélectionné parmi le groupe constitué d'un radical de chaîne carbonée en C₁-C₃₀, aliphatique, saturé ou insaturé, linéaire ou ramifié, d'un radical phényle, d'un radical phényle mono, di ou tri substitué, d'un radical phénylalkyle en C₁-C₆ et d'un radical phénylalkyle en C₁-C₆, mono, di, ou tri substitué, dans lequel le ou les groupements substituents du radical phényle ont chacun un total de 1 à 30 atomes de carbone, et dans laquelle chaque substitution peut être une chaîne carbonée saturée ou insaturée, linéaire ou ramifiée, un radical phényle, un radical alkylphényle, un radical phénylalkyle, ou un groupement alkylphénylalkyle ; dans laquelle n va de 2 à 4 et peut être identique ou différent pour chaque unité alkylène ; et dans lequel x va de 0 à 100 ;
B)
i) en mélangeant de manière intime dans ladite solution de réactifs et
ii) en faisant réagir l'acide phosphorique dans ladite solution de réactifs avec une quantité efficace de manière stoechiométrique d'anhydride phosphorique pour produire in-situ un réactif de phosphatation, ayant un pourcentage pondéral d'acide phosphorique équivalent efficace d'environ 118 à 125 ;
iii) la température à laquelle l'anhydride phosphorique est mélangé et réagit avec l'acide phosphorique dans le milieu alcoolique ne dépassant pas 60°C ; et
C) de réaction du réactif de phosphatation ainsi produit avec le milieu alcoolique à une température d'environ 75°C à environ 100°C pendant une durée de temps allant de 4 à 11 heures.

6. Procédé selon la revêtement 5, **caractérisé en ce que** l'étape A) est effectuée à une température qui ne dépasse pas 65°C.

7. Procédé selon l'une quelconque des revendications 5 et 6, **caractérisé en ce que** l'alcool et le réactif de phosphatation sont utilisés avec un rapport alcool-phosphore substantiellement équimolaire.

8. Procédé selon l'une quelconque des revendications 5 à 7, **caractérisé en ce que**, dans les compositions d'esters d'acides monoalkylphosphoriques, le rapport pondéral phosphate mono alkyle à phosphate dialkyle est supérieur à 80 : 20, **en ce que** les pourcentages en poids de l'alcool résiduel et de l'acide phosphorique résiduel sont individuellement inférieurs chacun à 6.

9. Procédé selon l'une quelconque des revendications précédentes, **caractérisé en ce que** l'alcool est choisi parmi les alcools laurylique, myristylique, cétylique, leurs éthoxylates et leurs mélanges, et l'éthoxylate du tristyrylphénol.

10. Procédé selon l'une quelconque des revendications précédentes, **caractérisé en ce que** le % en poids d'acide phosphorique équivalent efficace du réactif de phosphatation va d'environ 119 à environ 124.

11. Procédé selon la revendication 10, **caractérisé en ce que** le % en poids de l'acide phosphorique équivalent efficace du réactif de phosphatation va d'environ 121 à 123.
